# EUROPÄISCHE PATENTSCHRIFT

(11) **EP 0 538 755 B1**
(45) Veröffentlichungstag und Bekanntmachung des Hinweises auf die Patenterteilung: **30.11.1994**
(21) Anmeldenummer: 92117776.2
(22) Anmeldetag: 17.10.1992
(51) Int. Cl.: B01J 3/04, B01J 3/00, C04B 40/02

(54) **Verfahren zum Autoklavieren von porösem, stückigem Gut**
Process for treating by autoclave of porous piece-goods
Procédé pour traiter en autoclave de produits poreux en morceaux

(30) Priorität: 24.10.1991 DE 4135119
(43) Veröffentlichungstag der Anmeldung: 28.04.1993
(73) Patentinhaber: Hebel Aktiengesellschaft, D-82243 Fürstenfeldbruck (DE); SICOWA Verfahrenstechnik für Baustoffe GmbH & Co. KG, D-52072 Aachen (DE)
(72) Erfinder: Wosnitza, Franz, Prof. Dr.-Ing., W-5100 Aachen (DE); Beckmann, Georg, Dipl.-Ing. Dr., A-1030 Wien (AT); Zimmermann, Georg, Dipl.-Phys., W-5100 Aachen (DE)
(74) Vertreter: Sparing Röhl Henseler Patentanwälte

(56) Entgegenhaltungen:
- EP-A- 0 099 502
- EP-A- 0 133 239
- DE-A- 2 215 126
- DE-A- 3 041 045
- US-A- 2 534 303

## Beschreibung

Die Erfindung betrifft ein Verfahren zum Autoklavieren von porösem stückigem Gut, insbesondere Formkörpern, in dem entweder von Anfang an überstöchiometrisch Wasser vorhanden ist oder das im Verlauf des Autoklavierens Wasser freisetzt, mittels unter Druck stehendem Wasserdampf, wobei der Autoklavierzyklus aufeinanderfolgend eine mit Wasserdampf betriebene Aufheiz-, eine Halte- und eine Entspannungsphase für Druck und Temperatur umfaßt, wobei die Haltephase einen Trocknungsvorgang umfaßt, bei dem der Autoklav über den Ausgleich von Wärmeverlusten hinausgehend und eine Temperatur oberhalb der Verdampfungstemperatur des Wassers einnehmend indirekt beheizt und dabei das Gut durch geregeltes Abblasen von wasserdampfhaltigem Heizmedium aus dem Innern des Autoklaven getrocknet wird.

Ein derartiges Verfahren ist aus der EP-B-0 133 239 bekannt, bei dem man während der Haltephase Druck und Temperatur konstant hält, um während dieser Zeit die gewünschte Reaktion ablaufen zu lassen. Daran schließt sich dann ein Trocknungsvorgang an, während dem über den Ausgleich von Wärmeverlusten hinausgehend und eine Temperatur oberhalb der Verdampfungstemperatur des Wassers einnehmend der Autoklav zusätzlich beheizt wird, damit in dem Gut befindliches überschüssiges Wasser teilweise verdampft, das als Wasserdampf abgeblasen wird, um so ein trockneres Gut am Ende des Autoklavenzyklus zu erhalten. Hierbei wird aber sowohl für das Aufheizen als auch für das Halten und Trocknen Primärenergie - verbunden mit einem entsprechenden investitionsmäßigen Mehraufwand - aufgewendet.

DE-A-3041045 beschreibt ein Verfahren zur Energierückgewinnung bei Härtungsprozessen von Produkten in Druckkesseln, bei dem die Produkte in die Druckkessel eingebracht, dort über eine bestimmte Verweilzeit mit unter erhöhtem Druck stehenden Dampf in Kontakt gehalten und nach Entspannung der Druckkessel aus diesen herausgeführt werden und bei dem der Dampf eines ersten Druckkessels nach Beendigung des Härtungsprozesses bis etwa Druckausgleich in einen neu anzufahrenden drucklosen zweiten Druckkessel übergeleitet, der im ersten Druckkessel nach dem Überleiten verbleibende Restdampf teilweise mittels Dampfstrahl-Injektors abgesaugt und der im ersten Druckkegsel nach dem Absaugen verbleibende Restdampf abgelassen und der zweite Druckkessel mit Frischdampf aufgefüllt vird.

Aufgabe der Erfindung ist es, ein Verfahren nach dem Oberbegriff des Anspruchs 1 zu schaffen, das das zu autoklavierende Gut ohne Einsatz zusätzlicher Primärenergie wesentlich trockener aus dem Autoklavierprozeß herauskommen läßt.

Diese Aufgabe wird dadurch gelöst, daß sich der Trocknungsvorgang im wesentlichen über die gesamte Haltephase erstreckt, wobei einem oder mehreren in der Haltephase befindlichen Autoklaven soviel Wärme zugeführt wird, daß der für eine Aufheizphase notwendige Wasserdampf abgeblasen und gegebenenfalls nach vorheriger Zwischenspeicherung zum Betreiben einer Aufheizphase verwendet wird.

Insbesondere werden mehrere Autoklaven im Dampfverbund betrieben, deren Autoklavenzyklen so zueinander zeitlich versetzt sind, daß beim Trocknungsvorgang abgeblasener Wasserdampf aus der Haltephase eines oder mehrerer Autoklaven als wasserdampfhaltiges Heizmedium wenigstens einem in der Aufheizphase befindlichen Autoklaven zu dessen Aufheizen zugeführt wird.

Diejenigen Autoklaven, deren Zyklen sich in der Halte- und damit in der Trocknungsphase befinden, geben dabei insgesamt gerade soviel Wasserdampf ab, wie ein frisch beladener, kalter, druckloser Autoklav an Primärdampf benötigt, um aufgeheizt zu werden. Die sich in der Haltephase befindlichen Autoklaven wirken für den hochheizenden Autoklaven als Dampferzeuger mittels Anmachwasser, welches sich im Produkt selbst befindet, bzw. Sekundärwasser, das während des Autoklavierens freigesetzt wird, und Kondensat, das durch den sich beim Hochheizen auf dem Gut niederschlagenden und dann als Kondensat in das poröse Gut eindringenden Wasserdampf gebildet wurde. Infolge der indirekten Beheizung der Autoklaven in der Haltephase wird der Prozeßzustand im Inneren nur durch Zufuhr reiner Energie aufrechterhalten. Hierbei beginnt das in dem Gut befindliche Wasser, das sich in einer reinen Überhitzungsatmosphäre von Wasserdampf befindet, zu verdampfen. Die notwendige Verdampfungsenthalpie führt zum "Erhalten" des Überhitzungsdampfes, kontrahiert und erzeugt eine absinkende Naturkonvektion in dem Gut, zieht das verdampfte Wasser von der Produktoberfläche mit sich und erhöht stetig den Innendruck im Autoklaven. Ein druckgeregeltes Abblaseventil läßt den "kälteren" Heißdampf solange austreten, bis sich der Arbeitsdruck im Autoklaven wieder eingestellt hat. Dies wird bis zum Ende der Haltephase fortgeführt, wobei der austretende Dampf die Eigenschaften, die zum Hochheizen eines kalten Autoklaven nötig sind, aufweist, so daß letzteres ohne zusätzliche Primärenergie vorgenommen wird.

Formkörper aus bindemittelhaltigen Baustoffen, etwa Gas- oder Porenbeton-, Calciumsilikatblöcke od.dgl., werden mit einer überstöchiometrischen Menge an Wasser als Rohlinge hergestellt. Außerdem wird von den zunächst kalten Formkörpern der sich beim Aufheizen im Autoklaven auf ihrer Oberfläche niederschlagende Wasserdampf aufgesaugt. Letzteres geschieht auch beim Autoklavieren von Calciumsulfat-Betahalbhydrat zur Herstellung von Calciumsulfat-Alphahalbhydrat, bei welchem Prozeß zusätzlich zu einer an sich vorhandenen Anfangsfeuchte auch noch Kristallwasser während des Umkristallisierens freigesetzt wird.

Dadurch, daß sich der Trocknungsprozeß über die Haltephase erstreckt, erreicht man zudem niedrigere Feuchtigkeitsgrade bei dem den Autoklaven verlassenden Produkt. Hierbei wird durch die indirekte Beheizung während der Trocknungsphase erreicht, daß sich keine durch Strahlungswärme versprödeten Oberflächen ergeben.

Die Wärmequelle, insbesondere ein Thermoölerhitzer, braucht nur zum Hochfahren eines Autoklaven ausgelegt sein, um einerseits bei kalten Autoklaven ein anfängliches Aufheizen vornehmen zu können, und andererseits bei in Betrieb befindlichen Austoklaven nur die jeweils für einen Aufheizvorgang notwendige Wasserdampfmenge erzeugen zu können.

Weitere Ausgestaltungen der Erfindung sind der nachfolgenden Beschreibung zu entnehmen.

Die Erfindung wird nachstehend anhand der in den beigefügten Abbildungen dargestellten Ausführungsbeispiele näher erläutert.

Fig. 1 zeigt schematisch eine Autoklavanlage zur Durchführung des Verfahrens.

Fig. 2 zeigt ein Diagramm betreffend den Autoklavzyklus.

Fig. 3 zeigt schematisiert und ausschnittweise im Radialschnitt einen Autoklaven.

Fig. 4 zeigt eine Speicheranordnung.

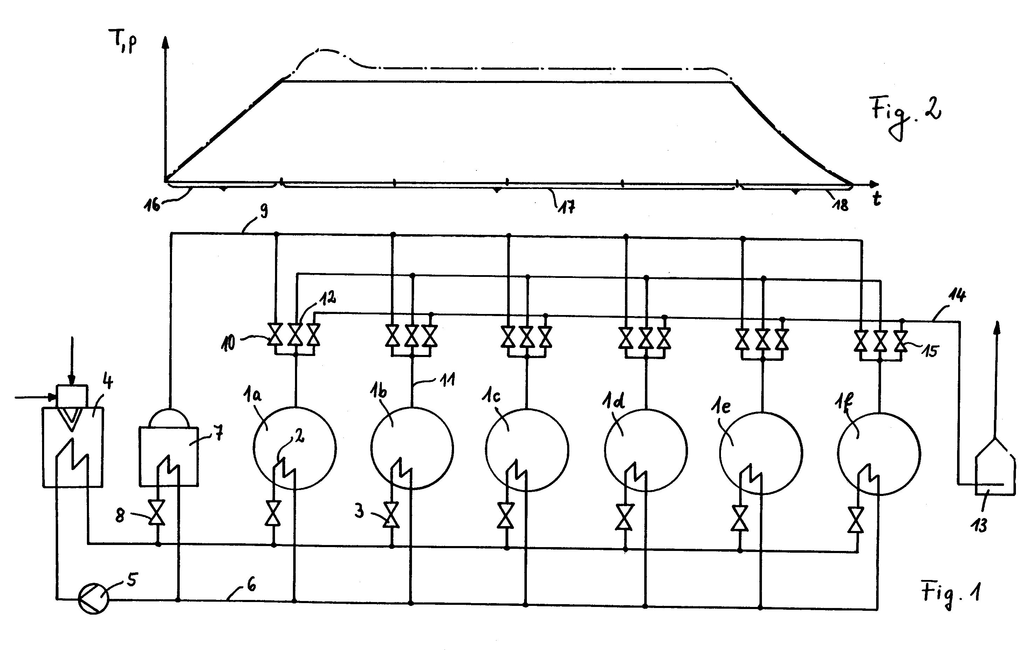

Die in Fig. 1 dargestellte Autoklavanlage umfaßt sechs Autoklaven 1a bis 1f, die über eine indirekte, in ihrem Inneren angeordnete Heizungeinrichtung 2 beheizbar sind. Die Heizungeinrichtungen 2 sind jeweils vorlaufseitig über ein Ventil 3 mit der Vorlaufseite eines Thermoölerhitzers 4 und rücklaufseitig mit der mit einer Pumpe 5 ausgerüsteten Rücklaufleitung 6 des Thermoölerhitzers 4 verbindbar. Außerdem ist ein Hilfsdampferzeuger 7 vorgesehen, der ebenfalls über ein Ventil 8 an den Thermoölerhitzer 4 anschließbar ist, um Hilfsdampf zu erzeugen, der über eine Leitung 9 und jeweils ein Ventil 10 einem jeweils gewünschten Autoklaven 1a bis 1f über dessen Dampfleitung 11 zuführbar ist. Die Dampfleitungen 11 sind ferner mit Abblaseventilen 12 versehen und untereinander verbunden. Außerdem kann ein Abblasebehälter 13 vorgesehen sein, der über eine Abdampfleitung 14 und ein Abblaseventil 15 mit jedem der Autoklaven 1 a bis 1f verbindbar ist.

Der in Fig. 2 dargestellte Autoklavenzyklus umfaßt eine Aufheizphase 16 von einer Zeiteinheit von z.B. 2h, während der Druck und Temperatur ansteigen, eine Haltephase 17 von etwa 4 Zeiteinheiten, während der zunächst die Temperatur noch weiter ansteigt, um dann auf einen im wesentlichen konstanten Wert zu fallen, und während der der Druck im wesentlichen infolge Dampfabblasens konstant gehalten wird, und eine Entspannungsphase 18 von etwa einer Zeiteinheit, während der Druck und Temperatur abgesenkt werden. Druck und Temperatur richten sich hierbei nach dem zu autoklavierenden Gut.

Wenn sämtliche Autoklaven 1a bis 1f kalt sind, wird nach dem Befüllen eines Autoklaven 1a dieser mit Wasserdampf aus dem vom Thermoölerhitzer 4 betriebenen Hilfsdampferzeuger 7 aufgeheizt. Wenn die Aufheizphase des Autoklaven 1a beendet ist, folgt dessen Haltephase, während der er Wasserdampf über sein Abblaseventil 12 gesteuert abgibt. Dieser Wasserdampf wird als Heizmedium für einen nächsten aufzuheizenden Autoklaven 1b verwendet. Jedoch reicht der vom Autoklaven 1a abgegebene Wasserdampf nicht aus, um den Aufheizvorgang des weiteren Autoklaven 1b bewirken zu können, weshalb der Hilfsdampferzeuger 7 noch zusätzlichen Dampf liefern muß. Stattdessen kann dem Autoklaven 1a gegebenenfalls auch soviel Wärmeenergie zugeführt werden, daß der zum Aufheizen des Autoklaven 1b benötigte Wasserdampf hierin erzeugt wird. - Schließlich sind alle Autoklaven 1a bis 1e in Betrieb, und zwar vier Autoklaven 1b bis 1e in zeitlich versetzten Bereichen ihrer Haltephase, der Autoklav 1a in der Entspannungsphase und der zuletzt hinzugekommene Autoklav 1f in der Aufheizphase. Letzterer wird mit dem Wasserdampf aus allen in der Haltephase befindlichen Autoklaven 1b bis 1e gespeist, so daß zusätzlicher Dampf vom Hilfsdampferzeuger 7 nicht mehr benötigt wird. Vielmehr erfolgt die Dampferzeugung für den Aufheizvorgang durch die Thermoölzufuhr zu den indirekten Heizungeinrichtungen 2 in den Autoklaven 1b bis 1e und das Abblasen von beim Trocknen erzeugten Wasserdampf. - Wenn der Autoklav 1f aufgeheizt ist, ist der Autoklav 1a entspannt, entleert und wieder neu befüllt, so daß dieser nunmehr mit dem Dampf der Autoklaven 1c bis 1f aufgeheizt werden kann, während der Autoklav 1b in die Entpsannungsphase gelangt, etc.

Gegebenenfalls kann auch Wasserdampf von einem in der Entspannungsphase befindlichen Autoklaven zum Aufheizen eines weiteren bis zum Druckausgleich verwendet werden, wonach der in der Entspannungsphase befindliche Autoklav weiter entspannt und der in der Aufheizphase befindliche durch Wasserdampf aus anderen in der Haltephase befindlichen Autoklaven weiter aufgeheizt wird.

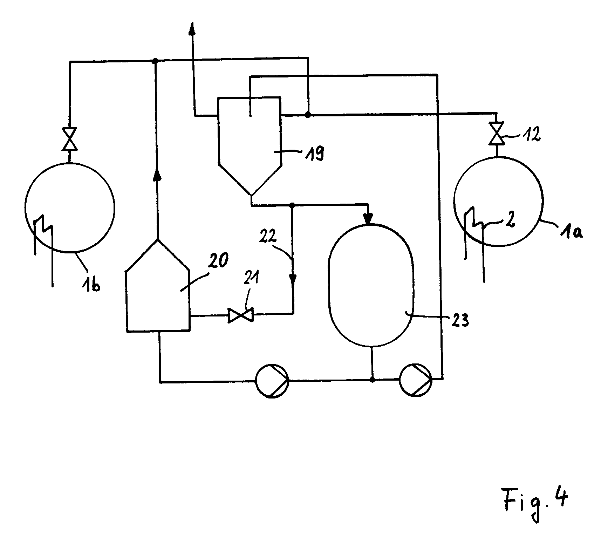

Der zum Aufheizen verwendete Wasserdampf kann vor seiner Verwendung als Heizmedium im weitesten Sinne gereinigt werden, so kann eine Staub- und/oder Ölabscheidung, ein Entfernen nichtkondensierbarer Gase, Entfernen der Überhitzungstemperatur usw. etwa mit Hilfe von Abscheidezyklonen, Filter, Dephlegmatoren, Mischvorwärmern mit nachgeschaltetem Entspannungsdampferzeuger, Dampfumformer etc. erfolgen. So kann etwa gemäß Fig. 4 der in der Haltephase abgegebene Dampf einem Kondensator 19 zugeführt werden, der nicht kondensierbares Gas an die Umgebung abgibt und das Kondensat einem Entspannungsdampferzeuger 20 über eine mit einem Ventil 21 versehene Leitung 22 zuführt. Der im Entspannungsdampferzeuger 20 erzeugte Dampf wird dann dem aufzuheizenden Autoklaven zugeführt.

Wenn nur wenige oder ein Autoklav vorhanden sind, kann der in der Haltephase erzeugte Wasserdampf zwischengespeichert werden. Dies kann auch bei oftmaligen An- und Abfahrvorgängen von Bedeutung sein. - Gemäß Fig. 4 kann hierzu der in der Haltephase abgegebene und im Kondensator 19 kondensierte Wasserdampf in einen Zwischenspeicher 23 eingeführt und bis zum Bedarf gespeichert werden. Als Zwischenspeicher 23 eignet sich beispielsweise ein Gefälle- oder ein Heißwasser-Schichtspeicher (Verdrängungs- oder Gleichdruckspeicher).

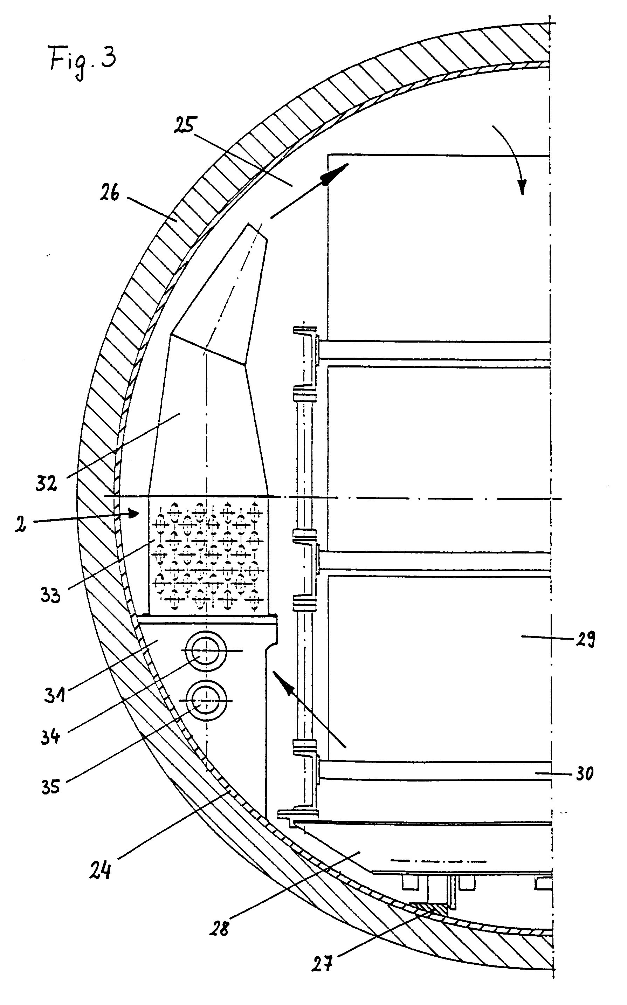

Gemäß Fig. 3 besitzt der Autoklav einen Autoklavmantel 24, der einen im wesentlichen zylindrischen Innenraum 25 umschließt, an einer Seite mit einer durch einen Deckel verschließbaren Beschickungsöffnung versehen ist und außen eine Wärmeisolierung 26 trägt, um Wärmeverluste nach außen möglichst gering zu halten. Bodenseitig befinden sich bei dem dargestellten Ausführungsbeispiel des Autoklaven am Autoklavmantel 24 angebrachte Schienen 27, um den Autoklaven mit Wagen 28 beschicken zu können, die Beschickungsgut 29, z.B. dampfzuhärtende Formkörper aus bindemittelhaltigen Baustoffen, auf Paletten 30 tragen, die auf den Wagen 28 gestapelt sind. In einem der seitlichen Krümmungsbereiche des Autoklavmantels 24, die ohnehin nicht von dem Beschickungsgut eingenommen werden, ist die Heizeinrichtung 2 angeordnet, die von einer Konsole 31 getragen wird. Die Heizeinrichtung 2 besteht wenigstens aus einem im wesentlichen vertikal angeordneten Kamin 32, der sich vorzugsweise mindestens über die halbe Höhe des Autoklavmantels 24 erstreckt und in etwa an die Krümmung des letzteren angepaßt ist, und einem Wärmetauscher 33, der im unteren Zuströmbereich des Kamins 32 angeordnet und mit einem Vorlauf 34 und einem Rücklauf 35 für Thermoöl verbunden ist, das außerhalb des Autoklaven mittels des Thermoölerhitzers 4 erhitzbar ist. Dementsprechend wird infolge der freien Konvektion beim Betrieb des Wärmetauschers 33 über den Kamin 32 eine in Umfangsrichtung des Autoklavmantels 24 umlaufende Strömung erzeugt, mit der Sattdampf oder vorzugsweise Heißdampf zum Aufheizen des Beschickungsguts 21 und eine Drucksteigerung erzeugt werden können. Die obere Austrittsöffnung des Kamins 32 ist vorzugsweise düsenartig verengt.

Wenn die Heizeinrichtung 2 aus mehreren Kaminen 32 mit darin angeordneten Wärmetauschern 33 besteht, können diese jeweils mit Abstand zueinander, zweckmäßigerweise aber auf beiden Seiten des Autoklaven angeordnet sein, damit sich eine im mittleren Bereich des Autoklaven abwärts gerichtete Strömung ergibt.

Eine derartige Heizeinrichtung 2 ist konstruktiv einfach, gibt die Wärme direkt und damit energetisch günstig im Autoklaven ab und die Trägheit ist gering, da sich eine Änderung der Thermoöltemperatur direkt im Autoklaven und nicht erst über die zur Innendruckaufnahme entsprechend kräftige Autoklavwandung 24 auswirkt.

## Patentansprüche

1. Verfahren zum Autoklavieren von porösem stückigem Gut, insbesondere Formkörpern, in dem entweder von Anfang an überstöchiometrisch Wasser vorhanden ist oder das im Verlauf des Autoklavierens Wasser freisetzt, mittels unter Druck stehendem Wasserdampf, wobei der Autoklaviervorgang aufeinanderfolgend eine mit Wasserdampf betriebene Aufheiz-, eine Halte- und eine Entspannungsphase für Druck und Temperatur umfaßt, wobei die Haltephase einen Trocknungsvorgang umfaßt, bei dem der Autoklav über den Ausgleich von Wärmeverlusten hinausgehend und eine Temperatur oberhalb der Verdampfungstemperatur des Wassers einnehmend indirekt beheizt und dabei das Gut durch geregeltes Abblasen von wasserdampfhaltigem Heizmedium aus dem Innern des Autoklaven getrocknet wird, dadurch **gekennzeichnet,** daß sich der Trocknungsvorgang im wesentlichen über die gesamte Haltephase erstreckt, wobei einem oder mehreren in der Haltephase befindlichen Autoklaven soviel Wärme zugeführt wird, daß der für eine Aufheizphase notwendige Wasserdampf abgeblasen und gegebenenfalls nach vorheriger Zwischenspeicherung zum Betreiben einer Aufheizphase verwendet wird.

2. Verfahren nach Anspruch 1, dadurch gekennzeichnet, daß mehrere Autoklaven im Dampfverbund betrieben werden, deren Autoklavenzyklen so zueinander zeitlich versetzt sind, daß beim Trocknungsvorgang abgeblasener Wasserdampf aus der Haltephase eines oder mehrerer Autoklaven als wasserdampfhaltiges Heizmedium wenigstens einem in der Aufheizphase befindlichen Autoklaven zu dessen Aufheizen zugeführt wird.

3. Verfahren nach Anspruch 1 oder 2, dadurch gekennzeichnet, daß Wasserdampf von einem in der Entspannungsphase befindlichen Autoklaven zum Aufheizen eines weiteren Autoklaven bis zum Druckausgleich verwendet wird.

4. Verfahren nach Anspruch 1, dadurch gekennzeichnet, daß die Zwischenspeicherung des Wasserdampfs über einen Gefällespeicher oder einen Schichtspeicher vorgenommen wird.

5. Verfahren nach einem der Ansprüche 1 bis 4, dadurch gekennzeichnet, daß der oder die Autoklaven während der Haltephase konvektiv beheizt werden.

6. Verfahren nach einem der Ansprüche 1 bis 5, dadurch gekennzeichnet, daß eine Wärmequelle verwendet wird, die auf das Hochfahren eines Autoklaven ausgelegt ist.

## Claims

1. Process for autoclaving porous, lumpy material, especially moulded articles, which material either contains, at the outset, water in superstoichiometric amounts or which liberates water in the course of autoclaving, by means of pressurized steam, the autoclaving process comprising, successively, a steam-operated heating phase, a holding phase and an expansion phase for pressure and temperature, the holding phase comprising a drying process in which the autoclave, going beyond the compensation of heat losses and adopting a temperature above the evaporation temperature of the water, is heated indirectly, the material being dried in the process by controlled blowing off of steam-containing heating medium from the interior of the autoclave, characterized in that the drying process extends essentially over the entire holding phase, at least one autoclave which is in the holding phase being supplied with a sufficient amount of heat for the steam required for a heating phase to be blown off and, after previous intermediate storage if required, to be used for operating a heating phase.

2. Process according to Claim 1, characterized in that a plurality of autoclaves are operated with an interconnected steam system, the cycles of the autoclaves being temporally offset with respect to one another in such a way that steam blown off during the drying process from the holding phase of at least one autoclave is supplied as a steam-containing heating medium to at least one autoclave which is in the heating phase for the purpose of heating said autoclave.

3. Process according to Claim 1 or 2, characterized in that steam from an autoclave in the expansion phase is used for heating a further autoclave until pressure equilibration is achieved.

4. Process according to Claim 1, characterized in that the intermediate storage of the steam is effected via a gradient reservoir or a stratified reservoir.

5. Process according to any one of Claims 1 to 4, characterized in that the autoclave(s) is (are) heated by convection during the holding phase.

6. Process according to any one of Claims 1 to 5, characterized in that a heat source is used which is designed for running up an autoclave.

## Revendications

1. Procédé pour autoclaver des produits poreux sous forme de pièces, en particulier des objets moulés, dans lequel de l'eau est soit disponible dès le début en proportion sur-stoechiométrique soit dégagée pendant le déroulement de l'autoclavage, sous forme de vapeur d'eau sous pression, le processus d'autoclavage comprenant successivement une phase de chauffage mettant en oeuvre de la vapeur d'eau, une phase d'entretien et une phase de détente pour l'abaissement de la pression et de la température, dans lequel la phase d'entretien comprend un processus de séchage, par lequel l'autoclave est chauffé indirectement pour la compensation des pertes externes de chaleur et à une température au-dessus de la température de vaporisation de l'eau et, à cette occasion, les produits sont séchés par la décharge contrôlée de l'agent de chauffage contenant la vapeur d'eau à partir de l'intérieur de l'autoclave, caractérisé en ce que le processus de séchage se déroule essentiellement durant l'ensemble de la phase d'entretien, des calories étant amenées à un ou plusieurs autoclaves se trouvant en phase d'entretien, en quantité telle que la vapeur d'eau nécessaire à la phase de chauffage est déchargée et utilisée, éventuellement après un stockage temporaire préalable, pour mettre en oeuvre une phase de chauffage.

2. Procédé selon la revendication 1, caractérisé en ce que plusieurs autoclaves à circuit de vapeur commun sont utilisés, leurs cycles d'autoclavage étant décalés les uns des autres, de telle façon que la vapeur d'eau déchargée pendant le processus de séchage de la phase d'entretien d'un ou plusieurs autoclaves est conduite, comme agent de chauffage contenant de la vapeur d'eau, pour son chauffage, vers au moins un des autoclaves se trouvant en phase de chauffage.

3. Procédé selon la revendication 1 ou 2, caractérisé en ce que la vapeur d'eau d'un autoclave se trouvant en phase de détente est utilisée pour le chauffage d'un autre autoclave jusqu'à équilibrage de pression.

4. Procédé selon la revendication 1, caractérisé en ce que le stockage temporaire de la vapeur d'eau est effectué par un accumulateur de chute ou un accumulateur à membrane.

5. Procédé selon l'une des revendications 1 à 4, caractérisé en ce que le ou les autoclaves sont chauffés par convection pendant la phase d'entretien.

6. Procédé selon l'une des revendications 1 à 5, caractérisé en ce qu'on utilise une source de chaleur qui soit étudiée pour la montée en puissance d'un autoclave.
